# EUROPEAN PATENT APPLICATION

(11) **EP 4 756 212 A1**
(43) Date of publication of application: **10.06.2026**
(21) Application number: 25218774.5
(22) Date of filing: 26.11.2025
(51) Int. Cl.: F02M 43/04, F02D 19/10

(54) **DUAL FUEL INJECTOR, ENGINE AND CONTROL METHOD**

(30) Priority: 03.12.2024 CN 202411759214
(71) Applicant: Weichai Power Co., Ltd., Weifang, Shandong 261061 (CN)
(72) Inventor: LI, Zhijie, Weifang, 261061 (CN); WANG, Xuepeng, Weifang, 261061 (CN); MA, Wenjuan, Weifang, 261061 (CN); LIU, Junlong, Weifang, 261061 (CN); MA, Fei, Weifang, 261061 (CN); GU, Yuncheng, Weifang, 261061 (CN); ZENG, Xiaoxiao, Weifang, 261061 (CN)
(74) Representative: HGF

(57) **Abstract**

The invention relates to a dual fuel injector, an engine, and a control method for a dual fuel injector. The dual fuel injector includes a fuel oil supply passage (1), a gaseous fuel supply passage (2), and a fuel injection portion (3) in communication with a combustion chamber, and the fuel injection portion (3) is selectively in communication with the fuel oil supply passage (1) and with the gaseous fuel supply passage (2). Therefore, both fuel oil and gaseous fuel are injected into the combustion chamber through the fuel injection portion (3). When passing through the fuel injection portion (3), the gaseous fuel can flush the fuel oil in the fuel injection portion and bring the fuel oil into the combustion chamber to improve the fuel utilisation rate of the fuel oil, avoid the accumulation and carbonization of fuel oil in the fuel injection portion, and ensure the thermal efficiency and emission performance of the engine. In addition, both gaseous fuel and fuel oil are injected into the combustion chamber through the fuel injection portion, thereby ensuring the atomisation effect and ignition effect of the diesel.

## Description

### TECHNICAL FIELD

The present disclosure relates to the technical field of engines and, in particular, to a dual fuel injector, an engine, and a control method for a dual fuel injector.

### BACKGROUND

Some related engines use a single fuel, while others use dual fuels. A dual fuel engine is used as an example. The fuel supply method for a dual fuel engine is to inject gas (such as natural gas) directly into a combustion chamber through a dual fuel injector and use a pilot amount of liquid fuel (such as diesel) to trigger the combustion of the gaseous fuel, thereby driving the engine to operate. In this manner, the power performance, fuel economy, and emission performance of the engine are effectively improved.

The related dual fuel injector, as disclosed in the earlier patent with application number CN202020447532.0, includes a fuel injector body, a gas injection needle valve, and a fuel oil injection valve needle. The fuel injector body has a first injection portion (for injecting natural gas) and a second injection portion (for injecting diesel), the gas injection needle valve is used for closing or opening the first injection portion, and the fuel oil injection valve needle is used for closing or opening the second injection portion. This injector has the problems below.
1) The injection of diesel and the injection of natural gas are independent of each other. Limited by current injection technology, the diesel injection rail pressure is relatively low. Moreover, to prevent diesel from being injected onto the bottom surface of the cylinder head, the part of the injector extending into the combustion chamber has a relatively large dimension. At high temperatures, diesel is prone to coking and carbon deposition. After long-term engine operation, the hole of the second injection portion becomes clogged, resulting in poor combustion and deterioration of thermal efficiency and emission performance.
2) The first injection portion and the second injection portion are designed in two spaced rows. After natural gas is injected, the distance between the natural gas and the diesel flame is relatively large. Moreover, due to the relatively low diesel injection rail pressure, the atomization effect of diesel is relatively poor, resulting in a relatively poor ignition effect.

Therefore, there is an urgent need for a dual fuel injector and an engine to solve the preceding problems.

### SUMMARY

The present disclosure is to provide a dual fuel injector, an engine, and a control method for a dual fuel injector to solve the following problem: the fuel oil injection hole of the related dual fuel injector is prone to carbon deposition, affecting the operation performance of the engine.

The present disclosure provides a dual fuel injector. The dual fuel injector includes a fuel oil supply passage and a gaseous fuel supply passage.

The fuel oil supply passage is used for delivering fuel oil, and the gaseous fuel supply passage is used for delivering gaseous fuel, where the dual fuel injector further includes a fuel injection portion, where the fuel injection portion is in communication with a combustion chamber, the fuel injection portion is selectively in communication with the fuel oil supply passage, and the fuel injection portion is selectively in communication with the gaseous fuel supply passage.

In one or more embodiments, the fuel injection portion includes a flow stabilization cavity and a fuel injection hole, the flow stabilization cavity is selectively in communication with the fuel oil supply passage, the flow stabilization cavity is selectively in communication with the gaseous fuel supply passage, the flow stabilization cavity is in communication with one end of the fuel injection hole, and the other end of the fuel injection hole is in communication with the combustion chamber.

In one or more embodiments, the flow stabilization cavity includes a first flow stabilization cavity, a second flow stabilization cavity, and a fuel oil injection hole connecting the first flow stabilization cavity with the second flow stabilization cavity, the first flow stabilization cavity is selectively in communication with the fuel oil supply passage, the second flow stabilization cavity is selectively in communication with the gaseous fuel supply passage, the second flow stabilization cavity surrounds the periphery of the first flow stabilization cavity, and the centerline of the second flow stabilization cavity coincides with the centerline of the first flow stabilization cavity.

In one or more embodiments, the fuel oil injection hole is opened horizontally and is located above the fuel injection hole.

In one or more embodiments, the dual fuel injector includes multiple fuel injection holes that are evenly distributed along the circumferential direction of the second flow stabilization cavity.

The flow stabilization cavity includes multiple fuel oil injection holes that are evenly distributed along the circumferential direction of the first flow stabilization cavity.

In one or more embodiments, the multiple fuel oil injection holes are located facing the top end of the second flow stabilization cavity and facing away from the bottom end of the second flow stabilization cavity, and the coverage area of fuel oil injected from the multiple fuel oil injection holes is capable of covering the entire cavity wall of the second flow stabilization cavity.

In one or more embodiments, the dual fuel injector includes a first valve body, a second valve body, and a housing, where the second valve body is slidably disposed in the housing, the first valve body is slidably disposed in the second valve body, the gaseous fuel supply passage is enclosed between the inner surfaces of the second valve body and the housing, and the fuel oil supply passage is enclosed between the first valve body and the second valve body.

The first flow stabilization cavity is disposed on the second valve body, the first flow stabilization cavity is in communication with the fuel oil supply passage through a first opening, and the first valve body is slidable relative to the second valve body and has a first open position and a first closed position, where when the first valve body is at the first closed position, the first valve body closes the first opening; and when the first valve body is at the first open position, the first valve body opens the first opening.

The second flow stabilization cavity is disposed on the housing, the second flow stabilization cavity is in communication with the gaseous fuel supply passage through a second opening, and the second valve body is slidable relative to the housing and has a second open position and a second closed position, where when the second valve body is at the second closed position, the second valve body closes the second opening; and when the second valve body is at the second open position, the second valve body opens the second opening.

In one or more embodiments, the bottom surface of a cylinder head is located between the fuel injection hole and the fuel oil injection hole.

The dual fuel injector provided in the present disclosure has at least the beneficial effects below.

The dual fuel injector includes a fuel oil supply passage, a gaseous fuel supply passage, and a fuel injection portion. The fuel oil supply passage is used for delivering fuel oil, the gaseous fuel supply passage is used for delivering gaseous fuel, the fuel injection portion is used for being in communication with the combustion chamber, the fuel injection portion is selectively in communication with the fuel oil supply passage, and the fuel injection portion is selectively in communication with the gaseous fuel supply passage. In this dual fuel injector, both fuel oil and gaseous fuel are injected into the combustion chamber through the fuel injection portion. When passing through the fuel injection portion, the gaseous fuel can flush the fuel oil in the fuel injection portion and bring the fuel oil into the combustion chamber for combustion to improve the fuel utilization rate of the fuel oil, avoid the accumulation of fuel oil in the fuel injection portion, further avoid the carbonization of fuel oil in the fuel injection portion, and ensure the thermal efficiency and emission performance of the engine. In addition, both gaseous fuel and fuel oil are injected into the combustion chamber through the fuel injection portion, thereby ensuring the atomization effect and ignition effect of the diesel. The present disclosure provides an engine. The engine includes the dual fuel injector in any one of the preceding solutions. The engine further includes a cylinder block, a cylinder head, and a piston, the piston is slidable in the cylinder block, and the cylinder head covers the cylinder block; when the piston moves to the top dead center, the combustion chamber is enclosed between the top surface of the piston and the bottom surface of the cylinder head; the dual fuel injector is inserted into the cylinder head, and the bottom end of the dual fuel injector extends into the combustion chamber; and the fuel injection portion is in communication with the combustion chamber.

The engine provided in the present disclosure has at least the beneficial effects below.

The engine includes the preceding dual fuel injector. The engine further includes a cylinder block, a cylinder head, and a piston. The piston is slidable in the cylinder block, and the cylinder head covers the cylinder block. When the piston moves to the top dead center, the combustion chamber is enclosed between the top surface of the piston and the bottom surface of the cylinder head. The dual fuel injector is inserted into the cylinder head, and the bottom end of the dual fuel injector extends into the combustion chamber. The fuel injection portion is in communication with the combustion chamber. The engine adopts the preceding dual fuel injector so that carbonization and coking of fuel oil in the dual fuel injector can be effectively avoided, thereby ensuring the reliability and stability of engine operation.

The present disclosure provides a control method for a dual fuel injector, which is implemented by the dual fuel injector in any one of the preceding solutions, where the control method for a dual fuel injector includes a fuel oil priority injection control method, a gaseous fuel priority injection control method, and a dual fuel synchronous injection control method.

The fuel oil priority injection control method includes: first connecting the fuel oil supply passage with the fuel injection portion and disconnecting the gaseous fuel supply passage from the fuel injection portion so that the fuel injection portion injects fuel oil into the combustion chamber; and then disconnecting the fuel oil supply passage from the fuel injection portion and connecting the gaseous fuel supply passage with the fuel injection portion so that the fuel injection portion injects gaseous fuel into the combustion chamber.

The gaseous fuel priority injection control method includes: first disconnecting the fuel oil supply passage from the fuel injection portion and connecting the gaseous fuel supply passage with the fuel injection portion so that the fuel injection portion injects gaseous fuel into the combustion chamber; and then connecting the fuel oil supply passage with the fuel injection portion and disconnecting the gaseous fuel supply passage from the fuel injection portion so that the fuel injection portion injects fuel oil into the combustion chamber.

The dual fuel synchronous injection control method includes: first connecting the fuel oil supply passage with the fuel injection portion and connecting the gaseous fuel supply passage with the fuel injection portion so that the fuel injection portion injects gaseous fuel and fuel oil into the combustion chamber synchronously; and then disconnecting the fuel oil supply passage from the fuel injection portion and disconnecting the gaseous fuel supply passage from the fuel injection portion.

The control method for a dual fuel injector provided in the present disclosure has at least the beneficial effects below.

The control method of a dual fuel injector includes a fuel oil priority injection control method, a gaseous fuel priority injection method, and a dual fuel synchronous injection control method. In the fuel oil priority injection control method, the fuel oil is injected before the gaseous fuel, part of the fuel oil injected first remains in the fuel injection portion, and the gaseous fuel injected later can flush the fuel oil remaining in the fuel injection portion into the combustion chamber, thereby avoiding the carbonization and coking of fuel oil and improving the utilization rate of the fuel oil. In the gaseous fuel priority injection control method, the gaseous fuel is injected before the fuel oil, part of the gaseous fuel injected first remains in the fuel injection portion, and the fuel oil injected later can bring the fuel oil remaining in the fuel injection portion into the combustion chamber, thereby improving the utilization rate of the gaseous fuel. In the synchronous injection control method, the fuel oil and the gaseous fuel are injected synchronously. Since the injection rail pressure of the gaseous fuel is greater than the injection rail pressure of the fuel oil, the fuel oil entering the fuel injection portion shares the injection rail pressure of the gaseous fuel and is more fully atomized after being injected into the combustion chamber. In addition, the fuel oil and the gaseous fuel are injected into the combustion chamber synchronously from the same fuel injection hole so that the ignition effect of the fuel oil can be optimized.

### BRIEF DESCRIPTION OF DRAWINGS

FIG. 1 is a first structural view of a dual fuel injector according to an example of the present disclosure (a first valve body is at a first closed position, and a second valve body is at a second closed position).
FIG. 2 is a second structural view of a dual fuel injector according to an example of the present disclosure (a first valve body is at a first open position, and a second valve body is at a second closed position).
FIG. 3 is a third structural view of a dual fuel injector according to an example of the present disclosure (a first valve body is at a first closed position, and a second valve body is at a second open position).
FIG. 4 is a fourth structural view of a dual fuel injector according to an example of the present disclosure (a first valve body is at a first open position, and a second valve body is at a second open position).

### Reference list

- 1: fuel oil supply passage
- 2: gaseous fuel supply passage
- 3: fuel injection portion
- 31: fuel injection hole
- 32: flow stabilization cavity
- 321: first flow stabilization cavity
- 322: second flow stabilization cavity
- 323: fuel oil injection hole
- 4: first opening
- 5: second opening
- 10: first valve body
- 20: second valve body
- 30: housing

### DETAILED DESCRIPTION

The technical solutions of the present disclosure are described clearly and completely below in conjunction with the drawings. Apparently, the described embodiments are part, not all, of the embodiments of the present disclosure. Based on the embodiments of the present disclosure, all other embodiments obtained by those of ordinary skill in the art without creative work are within the scope of the present disclosure.

In the description of the present disclosure, it is to be noted that orientations or position relations indicated by terms such as "center", "upper", "lower", "left", "right", "vertical", "horizontal", "inner", and "outer" are based on the drawings. These orientations or position relations are intended only to facilitate and simplify the description of the present disclosure and not to indicate or imply that a device or element referred to must have such particular orientations or must be configured or operated in such particular orientations. Thus, these orientations or position relations are not to be construed as limiting the present disclosure. In addition, terms such as "first" and "second" are used for the purpose of description and are not to be construed as indicating or implying relative importance. Terms "first position" and "second position" are two different positions. Moreover, when a first feature is described as "on", "above", or "over" a second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of the present disclosure, it is to be noted that the term "mounted", "connected to each other", or "connected" should be construed in a broad sense unless otherwise expressly specified and limited. For example, the term "connected" may refer to "fixedly connected", "detachably connected", or "integrated", may refer to "mechanically connected" or "electrically connected", or may refer to "connected directly", "connected indirectly through an intermediary", or "connected inside two elements". For those of ordinary skill in the art, specific meanings of the preceding terms in the present disclosure may be understood based on specific situations.

Embodiments of the present disclosure are described in detail below. Examples of the embodiments are illustrated in the drawings, where the same or similar reference numerals throughout the drawings represent the same or similar elements or elements having the same or similar functions. The embodiments described below with reference to the drawings are illustrative and intended only to explain the present disclosure and cannot be construed as limiting the present disclosure.

The related injector includes a fuel injector body, a gas injection needle valve, and a fuel oil injection valve needle. The fuel injector body has a first injection portion and a second injection portion, the gas injection needle valve is used for closing or opening the first injection portion, and the fuel oil injection valve needle is used for closing or opening the second injection portion. In this injector, the injection of diesel and the injection of natural gas are independent of each other. Limited by current injection technology, the diesel injection rail pressure is relatively low. Moreover, to prevent diesel from being injected onto the bottom surface of the cylinder head, the part of the injector extending into the combustion chamber has a relatively large dimension. At high temperatures, diesel is prone to coking and carbon deposition. After long-term engine operation, the hole of the second injection portion becomes clogged, resulting in poor combustion and deterioration of thermal efficiency and emission performance. In addition, the first injection portion and the second injection portion are designed in two spaced rows. After natural gas is injected, the distance between the natural gas and the diesel flame is relatively large. Moreover, due to the relatively low diesel injection rail pressure, the atomization effect of diesel is relatively poor, resulting in a relatively poor ignition effect.

For this reason, this embodiment provides a dual fuel injector to solve the preceding problems.

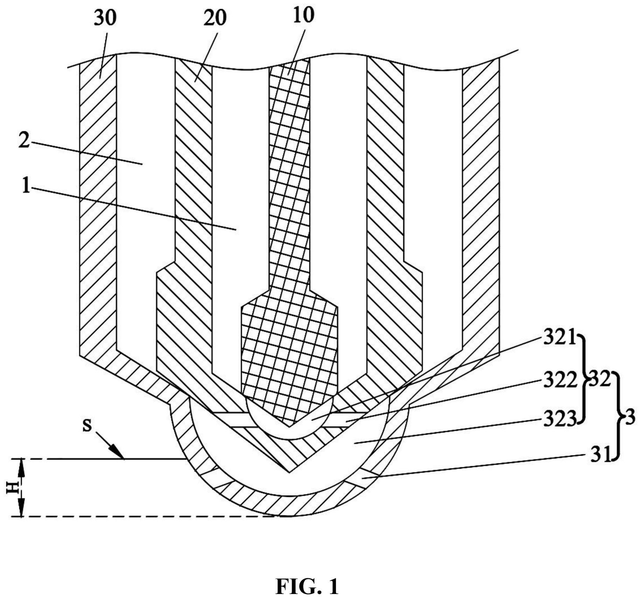

Referring to FIGS. 1 to 4, the dual fuel injector includes a fuel oil supply passage 1, a gaseous fuel supply passage 2, and a fuel injection portion 3. The fuel oil supply passage 1 is used for delivering fuel oil (such as diesel), the gaseous fuel supply passage 2 is used for delivering gaseous fuel (such as natural gas), the fuel injection portion 3 is used for being in communication with a combustion chamber, the fuel injection portion 3 is able to be selectively in communication with the fuel oil supply passage 1, and the fuel injection portion 3 is also able to be selectively in communication with the gaseous fuel supply passage 2. In this manner, both fuel oil and gaseous fuel are injected into the combustion chamber through the fuel injection portion 3. When passing through the fuel injection portion 3, the gaseous fuel can flush the fuel oil in the fuel injection portion 3 and bring the fuel oil into the combustion chamber for combustion, thereby improving the fuel oil utilization rate, avoiding the accumulation of fuel oil in the fuel injection portion 3, further avoiding the carbonization of fuel oil in the fuel injection portion 3, and ensuring the thermal efficiency and emission performance of the engine. In addition, both gaseous fuel and fuel oil are injected into the combustion chamber through the fuel injection portion 3 so that no gap exists between the gaseous fuel and fuel oil after the gaseous fuel and fuel oil are injected into the combustion chamber, thereby ensuring the atomization effect and ignition effect of diesel.

It is to be noted that natural gas will not undergo coking at high temperatures and will not cause carbon deposition in the fuel injection portion 3.

In one or more embodiments, the fuel injection portion 3 includes a flow stabilization cavity 32 and a fuel injection hole 31. The flow stabilization cavity 32 is able to be selectively in communication with the fuel oil supply passage 1, and the flow stabilization cavity 32 is also able to be selectively in communication with the gaseous fuel supply passage 2. The flow stabilization cavity 32 is in communication with one end of the fuel injection hole 31, and the other end of the fuel injection hole 31 is in communication with the combustion chamber. After the fuel oil and gaseous fuel enter the flow stabilization cavity 32, the flow stabilization cavity 32 can stabilize the flow rate of fuel oil and gaseous fuel as the fuel oil and gaseous fuel enter the fuel injection hole 31, thereby ensuring that the fuel oil and gaseous fuel are injected into the combustion chamber at a stable flow rate and ensuring sufficient combustion. In addition, the flow stabilization cavity 32 stabilizes the flow rate of the gaseous fuel so that it can be ensured that the gaseous fuel flushes the fuel oil in the fuel injection hole 31 at a stable flow rate, thereby ensuring a stable flushing effect.

In one or more embodiments, the flow stabilization cavity 32 includes a first flow stabilization cavity 321, a second flow stabilization cavity 322, and a fuel oil injection hole 323 connecting the first flow stabilization cavity 321 with the second flow stabilization cavity 322. The first flow stabilization cavity 321 is selectively in communication with the fuel oil supply passage 1, and the second flow stabilization cavity 322 is selectively in communication with the gaseous fuel supply passage 2. The second flow stabilization cavity 322 surrounds the periphery of the first flow stabilization cavity 321, and the centerline of the second flow stabilization cavity 322 coincides with the centerline of the first flow stabilization cavity 321. In this manner, on the one hand, after passing through the first flow stabilization cavity 321 for flow stabilization, the fuel oil enters the second flow stabilization cavity 322 at a stable flow rate, and the fuel oil can be further stabilized by the second flow stabilization cavity 322, thereby ensuring the flow stabilization effect on the fuel oil; on the other hand, through isolation by the first flow stabilization cavity 321, the gaseous fuel can be prevented from mixing into the fuel oil supply passage 1. Furthermore, in the case where the fuel is injected into the combustion chamber, when the fuel oil is injected before the gaseous fuel, the gaseous fuel can flush the fuel oil in the second flow stabilization cavity 322 and the fuel oil in the fuel injection hole 31, thereby preventing the fuel oil from undergoing carbonization and coking in the second flow stabilization cavity 322 and the fuel injection hole 31. When the fuel oil is injected after the gaseous fuel, the gaseous fuel remaining in the second flow stabilization cavity 322 can be brought into the combustion chamber by the fuel oil, thereby ensuring the fuel utilization rate of the gaseous fuel. When the fuel oil and the gaseous fuel are injected simultaneously, after the fuel oil enters the second flow stabilization cavity 322, the fuel oil can be fully mixed with the gaseous fuel so that the mixing uniformity of the gaseous fuel and fuel oil entering the combustion chamber can be improved, thereby improving the ignition effect.

It is to be noted that when the fuel is injected into the combustion chamber, when the fuel oil is injected after the gaseous fuel, during two consecutive times of fuel injection into the combustion chamber, the gaseous fuel injected in the subsequent injection can flush the fuel oil that is injected in the previous injection and remains in the second flow stabilization cavity 322 and the fuel injection hole 31, thereby preventing the fuel oil from undergoing carbonization and coking in the second flow stabilization cavity 322 and the fuel injection hole 31. Similarly, when the fuel oil is injected before the gaseous fuel, during two consecutive times of fuel injection into the combustion chamber, the fuel oil injected in the subsequent injection can bring the gaseous fuel that is injected in the previous injection and remains in the second flow stabilization cavity 322 and the fuel injection hole 31 into the combustion chamber.

In addition, the injection rail pressure of the gaseous fuel is greater than the injection rail pressure of the fuel oil. When the fuel oil and the gaseous fuel are injected simultaneously, the fuel oil shares the injection pressure of the gaseous fuel after entering the second flow stabilization cavity 322, thereby improving the atomization effect and the ignition effect.

In one or more embodiments, the flow stabilization cavity 32 includes multiple fuel oil injection holes 323 that are evenly distributed along the circumferential direction of the first flow stabilization cavity 321. In this manner, it can be ensured that the fuel oil is evenly injected into the second flow stabilization cavity 322. In this embodiment, the first flow stabilization cavity 321 is hemispherical.

In one or more embodiments, the dual fuel injector includes multiple fuel injection holes 31 that are evenly distributed along the circumferential direction of the second flow stabilization cavity 322, thereby ensuring that the gaseous fuel and the fuel oil are evenly injected into the combustion chamber. In this embodiment, the second flow stabilization cavity 322 is hemispherical.

In one or more embodiments, the bottom surface of a cylinder head is located between the fuel injection hole 31 and the fuel oil injection hole 323. The bottom surface of the cylinder head is shown as S in FIG. 1, and the distance between the bottom surface of the cylinder head and the bottom end of the fuel injection hole 31 is H. Compared with the dual fuel injector in the related art in which both the injection portion for injecting fuel oil and the injection portion for injecting gaseous fuel need to be arranged in the combustion chamber, in this embodiment, since both the fuel oil and gaseous fuel are injected into the combustion chamber through the same gaseous fuel injection hole, the value of H can be effectively reduced compared with the related art, thereby reducing the contact area between the dual fuel injector and the high-temperature gas in the combustion chamber, reducing the temperature of the dual fuel injector, and avoiding carbonization and coking of the fuel oil in the dual fuel injector.

In one or more embodiments, the fuel oil injection hole 323 is opened horizontally and is located above the fuel injection hole 31. In this manner, after the fuel oil enters the second flow stabilization cavity 322, the fuel oil can bring the gaseous fuel in the second flow stabilization cavity 322 into the combustion chamber from top to bottom.

In one or more embodiments, the fuel injection hole 31 is opened obliquely downward, that is, the injection direction of the fuel injection hole 31 is set at an included angle to the vertical plane. In an example, the included angle between the injection direction of the fuel injection hole 31 and the vertical plane may be determined by the shape of the combustion chamber.

In one or more embodiments, the fuel oil injection holes 323 are located facing the top end of the second flow stabilization cavity 322 and facing away from the bottom end of the second flow stabilization cavity 322, and the coverage area of the fuel oil injected from the multiple fuel oil injection holes 323 is capable of covering the entire cavity wall of the second flow stabilization cavity 322. In this manner, it can be ensured that after the fuel oil enters the second flow stabilization cavity 322, the fuel oil can bring the gaseous fuel in the entire second flow stabilization cavity 322 into the combustion chamber from top to bottom, thereby fully improving the combustion efficiency of the gaseous fuel.

In one or more embodiments, the dual fuel injector includes a first valve body 10, a second valve body 20, and a housing 30, the second valve body 20 is slidably disposed in the housing 30, the first valve body 10 is slidably disposed in the second valve body 20, the gaseous fuel supply passage 2 is enclosed between the inner surface of the second valve body 20 and the inner surface of the housing 30, and the fuel oil supply passage 1 is enclosed between the first valve body 10 and the second valve body 20.

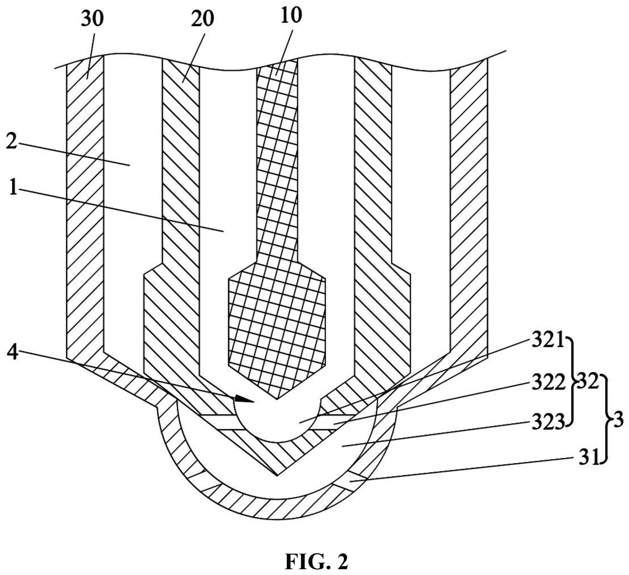

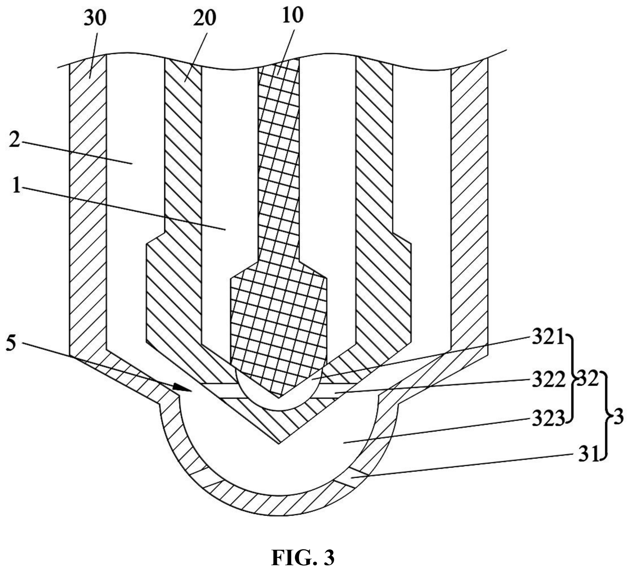

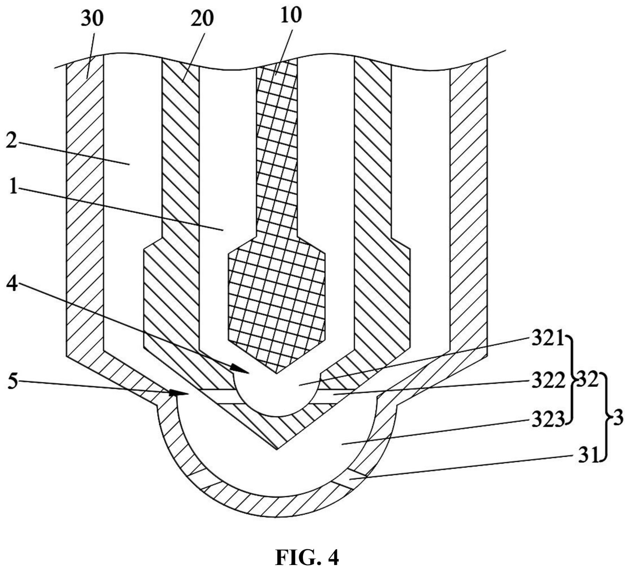

The first flow stabilization cavity 321 is disposed on the second valve body 20, the first flow stabilization cavity 321 is in communication with the fuel oil supply passage 1 through a first opening 4, and the first valve body 10 is slidable relative to the second valve body 20 and has a first open position and a first closed position. As shown in FIGS. 1 and 3, when the first valve body 10 is at the first closed position, the first valve body 10 closes the first opening 4, and in this case, the fuel oil supply passage 1 does not supply fuel oil to the first flow stabilization cavity 321. As shown in FIGS. 2 and 4, when the first valve body 10 is at the first open position, the first valve body 10 opens the first opening 4, and in this case, the fuel oil provided by the fuel oil supply passage 1 is able to enter the first flow stabilization cavity 321 through the first opening 4. In an embodiment, when the first valve body 10 is at the first closed position, the first valve body 10 partially extends into the first flow stabilization cavity 321 and is in sealing contact with the edge of the first opening 4, thereby separating the fuel oil supply passage 1 from the first flow stabilization cavity 321.

The second flow stabilization cavity 322 is disposed on the housing 30, the second flow stabilization cavity 322 is in communication with the gaseous fuel supply passage 2 through a second opening 5, and the second valve body 20 is slidable relative to the housing 30 and has a second open position and a second closed position. As shown in FIGS. 1 and 2, when the second valve body 20 is at the second closed position, the second valve body 20 closes the second opening 5, and in this case, the gaseous fuel provided by the gaseous fuel supply passage 2 does not enter the second flow stabilization cavity 322 through the second opening 5. As shown in FIGS. 3 and 4, when the second valve body 20 is at the second open position, the second valve body 20 opens the second opening 5, and in this case, the gaseous fuel provided by the gaseous fuel supply passage 2 is able to enter the second flow stabilization cavity 322 through the second opening 5. In an embodiment, when the second valve body 20 is at the second closed position, the second valve body 20 partially extends into the second flow stabilization cavity 322 and is in sealing contact with the edge of the second opening 5, thereby separating the gaseous fuel supply passage 2 from the second flow stabilization cavity 322.

In one or more embodiments, when the second valve body 20 opens the second opening 5, the fuel oil injection hole 323 is flush with the top end of the second flow stabilization cavity 322, thereby ensuring the effect that the gaseous fuel in the second flow stabilization cavity 322 is brought by the fuel oil.

The embodiment of the present disclosure further provides an engine, and the engine includes the preceding dual fuel injector. The engine further includes a cylinder block, a cylinder head, and a piston. The piston is slidable in the cylinder block, and the cylinder head covers the cylinder block. When the piston moves to the top dead center, a combustion chamber is enclosed between the top surface of the piston and the bottom surface of the cylinder head. The dual fuel injector is inserted into the cylinder head, and the bottom end of the dual fuel injector extends into the combustion chamber. The fuel injection portion 3 is in communication with the combustion chamber. The piston moves in the cylinder block, and the position where the top surface of the piston reaches the highest point is called the top dead center. In this case, the top surface of the piston is farthest from the center of rotation of the crankshaft. The engine adopts the preceding dual fuel injector so that carbonization and coking of fuel oil in the dual fuel injector can be effectively avoided, thereby ensuring the reliability and stability of engine operation.

The embodiment of the present disclosure further provides a control method for a dual fuel injector, and the control method for a dual fuel injector is implemented by the preceding dual fuel injector.

In one or more embodiments, the control method for a dual fuel injector includes a fuel oil priority injection control method, a gaseous fuel priority injection control method, and a dual fuel synchronous injection control method.

The fuel oil priority injection control method includes: first connecting the fuel oil supply passage 1 with the fuel injection portion 3 and disconnecting the gaseous fuel supply passage 2 from the fuel injection portion 3 so that the fuel injection portion 3 injects fuel oil into the combustion chamber; and then disconnecting the fuel oil supply passage 1 from the fuel injection portion 3 and connecting the gaseous fuel supply passage 2 with the fuel injection portion 3 so that the fuel injection portion 3 injects gaseous fuel into the combustion chamber. In an embodiment, referring to FIG. 1, before fuel needs to be injected into the combustion chamber, the first valve body 10 is at the first closed position and the second valve body 20 is at the second closed position. In this case, the fuel oil supply passage 1 and the gaseous fuel supply passage 2 are both disconnected from the fuel injection portion 3. Then, referring to FIG. 2, the first valve body 10 is switched to the first open position, the second valve body 20 remains at the second closed position, only the fuel oil supply passage 1 is in communication with the fuel injection portion 3, and the fuel oil supplied by the fuel oil supply passage 1 enters the first flow stabilization cavity 321 through the first opening 4, enters the second flow stabilization cavity 322 through the fuel oil injection hole 323, and then is injected into the combustion chamber through the fuel injection hole 31. Upon the completion of the fuel oil injection, referring to FIG. 3, the first valve body 10 is switched to the first closed position, the second valve body 20 is switched to the second open position, only the gaseous fuel supply passage 2 is in communication with the fuel injection portion 3, and the gaseous fuel supplied by the gaseous fuel supply passage 2 enters the second flow stabilization cavity 322 through the second opening 5 and then is injected into the combustion chamber through the fuel injection hole 31. Upon the completion of the gaseous fuel injection, referring to FIG. 1, the first valve body 10 remains at the first closed position, and the second valve body 20 is switched to the second closed position. In this fuel oil priority injection control method, part of the fuel oil injected first remains on the cavity wall of the second flow stabilization cavity 322 and in the fuel injection hole 31, the gaseous fuel injected later can flush the fuel oil remaining on the cavity wall of the second flow stabilization cavity 322 and in the fuel injection hole 31 into the combustion chamber to avoid carbonization and coking of the fuel oil and improve the utilization rate of the fuel oil. Moreover, during two consecutive injections, the fuel oil injected in the subsequent injection can bring the gaseous fuel that is injected in the previous injection and remains in the second flow stabilization cavity 322 and the fuel injection hole 31 into the combustion chamber, thereby improving the utilization rate of the gaseous fuel.

The gaseous fuel priority injection control method includes: first disconnecting the fuel oil supply passage 1 from the fuel injection portion 3 and connecting the gaseous fuel supply passage 2 with the fuel injection portion 3 so that the fuel injection portion 3 injects gaseous fuel into the combustion chamber; and then connecting the fuel oil supply passage 1 with the fuel injection portion 3 and disconnecting the gaseous fuel supply passage 2 from the fuel injection portion 3 so that the fuel injection portion 3 injects fuel oil into the combustion chamber. In an embodiment, referring to FIG. 1, before fuel needs to be injected into the combustion chamber, the first valve body 10 is at the first closed position and the second valve body 20 is at the second closed position. In this case, the fuel oil supply passage 1 and the gaseous fuel supply passage 2 are both disconnected from the fuel injection portion 3. Then, referring to FIG. 3, only the gaseous fuel supply passage 2 is in communication with the fuel injection portion 3, and the gaseous fuel supplied by the gaseous fuel supply passage 2 enters the second flow stabilization cavity 322 through the second opening 5 and then is injected into the combustion chamber through the fuel injection hole 31. Upon the completion of the gaseous fuel injection, referring to FIG. 2, the first valve body 10 is switched to the first open position, the second valve body 20 is switched to the second closed position, only the fuel oil supply passage 1 is in communication with the fuel injection portion 3, and the fuel oil supplied by the fuel oil supply passage 1 enters the first flow stabilization cavity 321 through the first opening 4, enters the second flow stabilization cavity 322 through the fuel oil injection hole 323, and then is injected into the combustion chamber through the fuel injection hole 31. Upon the completion of the fuel oil injection, referring to FIG. 1, the first valve body 10 is switched to the first closed position, and the second valve body 20 remains at the second closed position. In this gaseous fuel priority injection control method, part of the gaseous fuel injected first remains in the second flow stabilization cavity 322 and the fuel injection hole 31, and the fuel oil injected later can bring the gaseous fuel remaining in the second flow stabilization cavity 322 and the fuel injection hole 31 into the combustion chamber to improve the utilization rate of the gaseous fuel. Moreover, during two consecutive injections, the gaseous fuel injected in the subsequent injection can flush the fuel oil that is injected in the previous injection and remains on the cavity wall of the second flow stabilization cavity 322 and in the fuel injection hole 31 into the combustion chamber, thereby avoiding carbonization and coking of fuel oil.

The dual fuel synchronous injection control method includes: first connecting the fuel oil supply passage 1 with the fuel injection portion 3 and connecting the gaseous fuel supply passage 2 with the fuel injection portion 3 so that the fuel injection portion 3 injects gaseous fuel and fuel oil into the combustion chamber synchronously; and then disconnecting the fuel oil supply passage 1 from the fuel injection portion 3 and disconnecting the gaseous fuel supply passage 2 from the fuel injection portion 3. In an embodiment, referring to FIG. 1, before fuel needs to be injected into the combustion chamber, the first valve body 10 is at the first closed position and the second valve body 20 is at the second closed position. In this case, the fuel oil supply passage 1 and the gaseous fuel supply passage 2 are both disconnected from the fuel injection portion 3. Then, referring to FIG. 4, both the fuel oil supply passage 1 and the gaseous fuel supply passage 2 are in communication with the fuel injection portion 3, the fuel oil supplied by the fuel oil supply passage 1 enters the first flow stabilization cavity 321 through the first opening 4 and enters the second flow stabilization cavity 322 through the fuel oil injection hole 323, the gaseous fuel supplied by the gaseous fuel supply passage 2 enters the second flow stabilization cavity 322 through the second opening 5, and the gaseous fuel and the fuel oil are fully mixed in the second flow stabilization cavity 322 and are injected into the combustion chamber through the fuel injection hole 31. Since the injection rail pressure of the gaseous fuel is greater than the injection rail pressure of the fuel oil, the fuel oil entering the second flow stabilization cavity 322 shares the injection rail pressure of the gaseous fuel and is more fully atomized after being injected into the combustion chamber. Moreover, the fuel oil and the gaseous fuel are synchronously injected into the combustion chamber from the same fuel injection hole 31 so that the ignition effect of the fuel oil can be optimized. Upon the completion of the gaseous fuel injection and fuel oil injection, referring to FIG. 1, the first valve body 10 is switched to the first closed position, the second valve body 20 is switched to the second closed position, and the fuel oil supply passage 1 and the gaseous fuel supply passage 2 are both disconnected from the fuel injection portion 3.

Apparently, the preceding embodiments of the present disclosure are illustrative examples of the present disclosure and are not intended to limit the implementations of the present disclosure. Those of ordinary skill in the art can make changes or variations in other different forms based on the preceding description. All embodiments do not need to be and cannot be exhausted herein.

## Claims

1. A dual fuel injector, comprising a fuel oil supply passage (1) and a gaseous fuel supply passage (2), wherein the fuel oil supply passage (1) is used for delivering fuel oil, and the gaseous fuel supply passage (2) is used for delivering gaseous fuel, the dual fuel injector further comprises a fuel injection portion (3), the fuel injection portion (3) is used for being in communication with a combustion chamber, the fuel injection portion (3) is selectively in communication with the fuel oil supply passage (1), and the fuel injection portion (3) is selectively in communication with the gaseous fuel supply passage (2).

2. The dual fuel injector of claim 1, wherein the fuel injection portion (3) comprises a flow stabilization cavity (32) and a fuel injection hole (31), the flow stabilization cavity (32) is selectively in communication with the fuel oil supply passage (1), the flow stabilization cavity (32) is selectively in communication with the gaseous fuel supply passage (2), the flow stabilization cavity (32) is in communication with one end of the fuel injection hole (31), and another end of the fuel injection hole (31) is in communication with the combustion chamber.

3. The dual fuel injector of claim 2, wherein the flow stabilization cavity (32) comprises a first flow stabilization cavity (321), a second flow stabilization cavity (322), and a fuel oil injection hole (323) connecting the first flow stabilization cavity (321) with the second flow stabilization cavity (322), the first flow stabilization cavity (321) is selectively in communication with the fuel oil supply passage (1), the second flow stabilization cavity (322) is selectively in communication with the gaseous fuel supply passage (2), the second flow stabilization cavity (322) surrounds periphery of the first flow stabilization cavity (321), and a centerline of the second flow stabilization cavity (322) coincides with a centerline of the first flow stabilization cavity (321).

4. The dual fuel injector of claim 3, wherein the fuel oil injection hole (323) is opened horizontally and is located above the fuel injection hole (31).

5. The dual fuel injector of claim 3, comprising a plurality of fuel injection holes (31) that are evenly distributed along a circumferential direction of the second flow stabilization cavity (322); and
the flow stabilization cavity (32) comprises a plurality of fuel oil injection holes (323) that are evenly distributed along a circumferential direction of the first flow stabilization cavity (321).

6. The dual fuel injector of claim 5, wherein the plurality of fuel oil injection holes (323) are located facing a top end of the second flow stabilization cavity (322) and facing away from a bottom end of the second flow stabilization cavity (322), and a coverage area of fuel oil injected from the plurality of fuel oil injection holes (323) is capable of covering an entire cavity wall of the second flow stabilization cavity (322).

7. The dual fuel injector of claim 3, comprising a first valve body (10), a second valve body (20), and a housing (30), wherein the second valve body (20) is slidably disposed in the housing (30), the first valve body (10) is slidably disposed in the second valve body (20), the gaseous fuel supply passage (2) is enclosed between an inner surface of the second valve body (20) and an inner surface of the housing (30), and the fuel oil supply passage (1) is enclosed between the first valve body (10) and the second valve body (20);
the first flow stabilization cavity (321) is disposed on the second valve body (20), the first flow stabilization cavity (321) is in communication with the fuel oil supply passage (1) through a first opening (4), and the first valve body (10) is slidable relative to the second valve body (20) and has a first open position and a first closed position, wherein when the first valve body (10) is at the first closed position, the first valve body (10) closes the first opening (4), and when the first valve body (10) is at the first open position, the first valve body (10) opens the first opening (4); and
the second flow stabilization cavity (322) is disposed on the housing (30), the second flow stabilization cavity (322) is in communication with the gaseous fuel supply passage (2) through a second opening (5), and the second valve body (20) is slidable relative to the housing (30) and has a second open position and a second closed position, wherein when the second valve body (20) is at the second closed position, the second valve body (20) closes the second opening (5), and when the second valve body (20) is at the second open position, the second valve body (20) opens the second opening (5).

8. The dual fuel injector of any one of claims 3 to 7, wherein a bottom surface of a cylinder head is located between the fuel injection hole (31) and the fuel oil injection hole (323).

9. An engine, comprising the dual fuel injector of any one of claims 1 to 8, wherein the engine further comprises a cylinder block, a cylinder head, and a piston, the piston is slidable in the cylinder block, and the cylinder head covers the cylinder block, when the piston moves to a top dead center, the combustion chamber is enclosed between a top surface of the piston and a bottom surface of the cylinder head, the dual fuel injector is inserted into the cylinder head, a bottom end of the dual fuel injector extends into the combustion chamber, and the fuel injection portion (3) is in communication with the combustion chamber.

10. A control method for a dual fuel injector, implemented by the dual fuel injector of any one of claims 1 to 8, wherein the control method for a dual fuel injector comprises a fuel oil priority injection control method, a gaseous fuel priority injection control method, and a dual fuel synchronous injection control method;
wherein the fuel oil priority injection control method comprises: first connecting the fuel oil supply passage (1) with the fuel injection portion (3) and disconnecting the gaseous fuel supply passage (2) from the fuel injection portion (3) so that the fuel injection portion (3) injects fuel oil into the combustion chamber; and then disconnecting the fuel oil supply passage (1) from the fuel injection portion (3) and connecting the gaseous fuel supply passage (2) with the fuel injection portion (3) so that the fuel injection portion (3) injects gaseous fuel into the combustion chamber;
the gaseous fuel priority injection control method comprises: first disconnecting the fuel oil supply passage (1) from the fuel injection portion (3) and connecting the gaseous fuel supply passage (2) with the fuel injection portion (3) so that the fuel injection portion (3) injects gaseous fuel into the combustion chamber; and then connecting the fuel oil supply passage (1) with the fuel injection portion (3) and disconnecting the gaseous fuel supply passage (2) from the fuel injection portion (3) so that the fuel injection portion (3) injects fuel oil into the combustion chamber; and
the dual fuel synchronous injection control method comprises: first connecting the fuel oil supply passage (1) with the fuel injection portion (3) and connecting the gaseous fuel supply passage (2) with the fuel injection portion (3) so that the fuel injection portion (3) injects gaseous fuel and fuel oil into the combustion chamber synchronously; and then disconnecting the fuel oil supply passage (1) from the fuel injection portion (3) and disconnecting the gaseous fuel supply passage (2) from the fuel injection portion (3).
